Europäisches Patentamt

European Patent Office

Office européen des brevets

(11) Veröffentlichungsnummer: **0 341 628**
**A2**

(12) **EUROPÄISCHE PATENTANMELDUNG**

(21) Anmeldenummer: 89108241.4

(22) Anmeldetag: 08.05.89

(51) Int. Cl.⁴ **B27G 13/00 , B23C 5/10**

(30) Priorität: 10.05.88 DE 3815917

(43) Veröffentlichungstag der Anmeldung:
15.11.89 Patentblatt 89/46

(84) Benannte Vertragsstaaten:
AT BE CH DE ES FR GB GR IT LI LU NL SE

(71) Anmelder: LACH-SPEZIAL-WERKZEUGE GmbH
Donaustrasse 17-19
D-6450 Hanau 1(DE)

(72) Erfinder: Pallischeck, Günther
Donaustrasse 21
D-6450 Hanau(DE)

(74) Vertreter: Beyer, Werner, Dipl.-Ing.
Patentanwälte Dipl.-Ing. Werner Beyer
Dipl.-Wirtsch.-Ing. Bernd Jochem
Staufenstrasse 36 Postfach 17 01 45
D-6000 Frankfurt/Main(DE)

(54) Fräswerkzeug, insbesondere Oberfräser für die Bearbeitung von Holz, Kunststoff und ähnlichen Materialien.

(57) Es wird ein Fräswerkzeug, insbesondere ein Oberfräser, für die Bearbeitung von Holz, Kunststoff und ähnlichen Materialien vorgeschlagen. Um einen sehr stabilen, weniger als bisher zu Vibrationen neigenden Werkzeugkörper zu erhalten, ist vorgesehen, daß der die Schneide (16) tragende axiale Bereich des Fräserkörpers durch mehrere axial aneinander grenzende, scheibenförmige Segmente (14) gebildet ist, deren Mittellängsachsen in gleichmäßiger Verteilung auf dem Umfang eines gemeinsamen Kreises um die Drehachse (12) liegen.

Fig.2

## Fräswerkzeug, insbesondere Oberfräser für die Bearbeitung von Holz, Kunststoff und ähnlichen Materialien

Die Erfindung betrifft ein Fräswerkzeug, insbesondere einen Oberfräser für die Bearbeitung von Holz, Kunststoff und ähnlichen Materialien mit wenigstens einer axial in mehrere Abschnitte unterteilten Schneide.

Bei der Bearbeitung von Holz, Holzwerkstoffen, wie z. B. Spanplatten, Sperrholzplatten, Tischlerplatten, mitteldichten Faserplatten, sowie von Kunststoffen und Kunststoff-Verbundmaterialien, wie z. B. faserverstärkten Kunststoffen, wird mit sehr hohen Drehzahlen von z. B. 18000 Upm oder sogar 24000 Upm des Fräswerkzeugs gearbeitet. Die dabei verwendeten sogenannten Oberfräser sind Schaftfräser. Sie haben in der Regel 1 - 3 Flügel am Umfang, an denen die Abschnitte einer oder mehrerer Schneiden angebracht sind. Durch die gegenüberliegende Schneidenanordnung und den unterbrochenen Schnitt kommt es zu einzelnen Messerschlägen, die den Werkzeugkörper einer hohen Wechselbiegebelastung aussetzen und starken Lärm erzeugen. Durch den schlagartig pulsierenden Schnittdruck wird außerdem die Frässpindel außerordentlich stark belastet, und es kommt vorzeitig zu Lagerschäden. Kleinere Flugkreisdurchmesser zwingen zu entsprechend dünnen Werkzeugkörpern, bei denen die Gefahr des Bruchs besonders groß ist.

Der Erfindung liegt daher die Aufgabe zugrunde, ein Fräswerkzeug der eingangs genannten Art zu schaffen, welches bei geringerer Bruchgefahr höhere Schnittleistungen erlaubt, die Frässpindellagerung schont und weniger Lärm erzeugt.

Vorstehende Aufgabe wird erfindungsgemäß dadurch gelöst, daß der die Schneide tragende axiale Bereich des Fräserkörpers durch mehrere axial aneinander grenzende, scheibenförmige Segmente gebildet ist, deren Mittellängsachsen in gleichmäßiger Verteilung auf dem Umfang eines gemeinsamen Kreises um die Drehachse liegen. Durch die Aufgliederung des Werkzeugkörpers in mehrere verhältnismäßig kleine Segmente, deren Länge z. B. nur etwa 8 mm beträgt, und durch die entsprechende Aufteilung der Schneiden wird mit zunehmender Anzahl von Segmenten auch ein zunehmend ruhigerer Lauf erreicht, weil immer mehrere Schneiden im Eingriff sind. Der Fräser kann besser ausgewuchtet werden. Es entstehen weniger Vibrationen, und dementsprechend ist auch die Lärmbelästigung geringer.

Infolge der exzentrischen Anordnung der Segmente und damit auch der Schneiden erhält man außerdem einen sehr großen Spanraum und einen sehr freien Rücken. Hierdurch wird ein Brennen vermieden und der Schnittdruck gesenkt. Die Spanförderleistung wird erhöht.

In bevorzugter Ausgestaltung der Erfindung sind die Segmente in derselben Reihenfolge axial benachbart, in welcher ihre Mittellängsachsen auf dem Umfang des gemeinsamen Kreises benachbart sind. Die mit Bezug auf die Drehachse schraubenförmige Anordnung der Segmente bietet den Vorteil großer Übergangs- bzw. Verbindungsflächen zwischen den Segmenten. Dadurch wird eine verhältnismäßig starke Seele erreicht und die Bruchgefahr gemindert.

In praktischer Ausführung der Erfindung wird man in der Regel eine Schneide vorsehen, deren Abschnitte jeweils an dem am weitesten von der Drehachse entfernten Umfangsbereich der Segmente angeordnet sind. Bei nicht zu starker Exzentrizität oder weiter aus den Segmenten radial herausragenden Schneiden kann man aber auch eine Ausführung verwenden, bei welcher am Umfang jedes Segments diametral gegenüberliegend zwei Schneidenabschnitte im Abstand von 90° von dem mit Bezug auf die Drehachse am stärksten exzentrischen Punkt angebracht sind.

Um saubere bearbeitete Flächen zu erhalten, ist es bei der Erfindung zweckmäßig, daß sich die Abschnitte der Schneide bzw. der Schneiden axial jeweils beidseitig über das sie tragende Segment hinaus erstrecken. Damit ragen die Schneidenabschnitte zwar axial teilweise aus den Segmenten heraus, um sich gegenseitig axial zu überdecken, da jedoch der Überstand nur sehr kurz zu sein braucht, erwächst daraus keine Gefahr für die Schneide.

Es finden vorzugsweise Schneiden aus polykristalinem Diamant Anwendung. Die Erfindung eignet sich aber auch für alle anderen zur Bearbeitung von Kunststoff und Holzwerkstoffen zum Einsatz kommenden Schneidmaterialien. Dementsprechend ist es für die Erfindung auch unerheblich, wie die Schneidenabschnitte am Werkzeugkörper befestigt sind. Dasselbe gilt für die im Einzelfall vom Fachmann zu wählenden Profile und Winkel an der Schneide. Es sei jedoch besonders hervorgehoben, daß sich das erfindungsgemäße Fräswerkzeug für Schneiden mit extremen Achswinkeln eignet. Die Anbringung einer Bohr- bzw. Grundschneide kann ebenfalls in herkömmlicher Weise erfolgen.

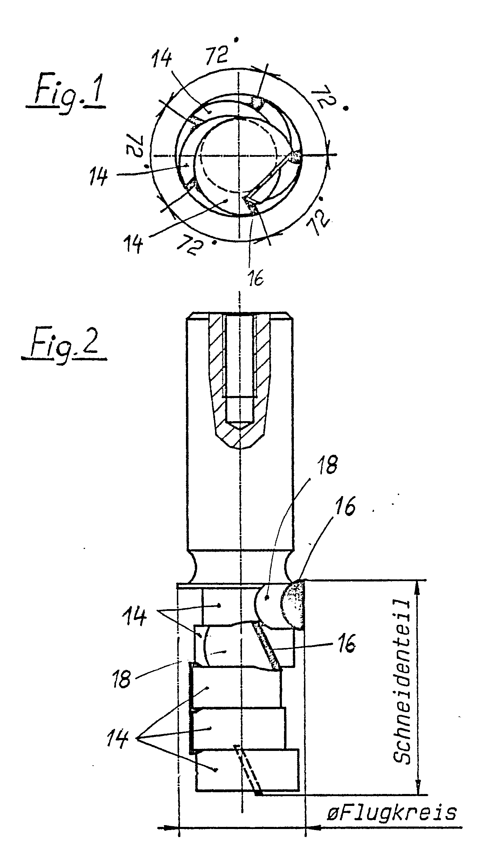

Ein Ausführungsbeispiel der Erfindung ist in der Zeichnung dargestellt. Diese zeigt in Fig. 1 eine Stirnansicht und in Fig. 2 eine Seitenansicht eines Oberfräsers für die Holz- oder Kunststoffbearbeitung.

Der gezeigte Oberfräser hat einen Schaft 10, mit dem er in üblicher Weise in das Werkzeugfutter einer Frässpindel eingespannt wird. Im Schneidenteil hat der dargestellte Oberfräser jedoch nicht die sonst gebräuchlichen Flügel, sondern ist im Beispielsfall in fünf jeweils 8 mm lange, exzentrisch zur Drehachse 12 angeordnete, scheibenförmige Segmente 14 gegliedert. Jedes der Segmente ist im wesentlichen rund, trägt jeweils am Umfang an der am weitesten exzentrischen Stelle einen Schneidenabschnitt 16 und ist neben diesem mit einer Aussparung 18 versehen, die eine Spankammer bildet.

Wie am besten aus Fig. 1 hervorgeht, sind die fünf exzentrischen scheibenförmigen Segmente 14 gleichmäßig über den Umfang verteilt. Ihre Mittellängsachsen liegen auf einem gemeinsamen Kreis mit einem gleichmäßigen Winkelabstand von 72°. Dementsprechend liegen auch die Punkte größer Exzentrizität jedes Segments 14, wo die Schneidenabschnitte 16 angebracht sind, jeweils 72° auseinander. Man könnte zwar unabhängig davon, ob eine gerade oder ungerade Zahl von Segmenten gewählt wird, auch solche Segmente axial nebeneinander legen, deren Mittellängsachsen auf dem gemeinsamen Kreis im wesentlichen diametral gegenüberliegen, vorgezogen wird jedoch eine Anordnung, bei welcher diejenigen Segmente axial nebeneinander liegen, deren Mittellängsachsen auf dem gemeinsamen Kreis benachbart sind. In diesem Fall ergeben sich große Verbindungs- bzw. Übergangsflächen zwischen den Segmenten.

## Ansprüche

1. Fräswerkzeug, insbesondere Oberfräser, für die Bearbeitung von Holz, Kunststoff und ähnlichen Materialien mit wenigstens einer axial in mehrere Abschnitte unterteilten Schneide, **dadurch gekennzeichnet**, daß der die Schneide (16) tragende axiale Bereich des Fräserkörpers durch mehrere axial aneinander grenzende, scheibenförmige Segmente (14) gebildet ist, deren Mittellängsachsen in gleichmäßiger Verteilung auf dem Umfang eines gemeinsamen Kreises um die Drehachse (12) liegen.

2. Fräswerkzeug nach Anspruch 1, **dadurch gekennzeichnet**, daß die Segmente (14) in derselben Reihenfolge axial benachbart sind, in welcher ihre Mittellängsachsen auf dem Umfang des gemeinsamen Kreises benachbart sind.

3. Fräswerkzeug nach Anspruch 1 oder 2, **dadurch gekennzeichnet**, daß die Abschnitte der Schneide (16) jeweils an dem am weitesten von der Drehachse (12) entfernten Umfangsbereich der Segmente (14) angeordnet sind.

4. Fräswerkzeug nach Anspruch 1 oder 2, **dadurch gekennzeichnet**, daß am Umfang jedes Segments (14) diametral gegenüberliegend zwei Schneidenabschnitte (16) im Abstand von 90° von dem mit Bezug auf die Drehachse (12) am stärksten exzentrischen Punkt angebracht sind.

5. Fräswerkzeug nach einem der vorhergehenden Ansprüche, **dadurch gekennzeichnet**, daß sich die Abschnitte der Schneide (16) axial jeweils beidseitig über ein sie tragendes, zwischen zwei angrenzenden Segmenten (14) liegendes Segment hinaus erstrecken.

_Fig.1_

_Fig.2_

14
72
72
72
14
14
72
16

18
16
14
16
18
14
_Schneidenteil_
_øFlugkreis_